# EUROPEAN PATENT SPECIFICATION

(11) **EP 3 450 154 B1**
(45) Date of publication and mention of the grant of the patent: **29.07.2020**
(21) Application number: 18191837.6
(22) Date of filing: 30.08.2018
(51) Int. Cl.: B29D 30/24, B29D 30/32

(54) **TIRE BUILDING DRUM AND METHOD OF BUILDING A TIRE**
REIFENAUFBAUTROMMEL UND VERFAHREN ZUM AUFBAUEN EINES REIFENS
TAMBOUR DE CONSTRUCTION DE PNEU ET PROCÉDÉ DE FABRICATION DE PNEU

(30) Priority: 01.09.2017 US 201715693781; 01.09.2017 US 201715693783
(43) Date of publication of application: 06.03.2019
(73) Proprietor: The Goodyear Tire & Rubber Company, Akron, OH 44316 (US)
(72) Inventor: STOILA, George Michael, Tallmadge, OH 44278 (US); HOGAN, Michael James, Tallmadge, OH 44278 (US); KMIECIK, Frank Anthony, Akron, OH 44313 (US); YAO, Minwu, Stow, OH 44224 (US); MONTGOMERY, Mark John, Rootstown, OH 44272 (US); LUNDELL, Dennis Alan, Akron, OH 44313 (US); CONGER, Kenneth Dean, Stow, OH 44224 (US); MORALES, Pablo Rafael, Brimfield, OH 44240 (US); ONDO, Andrew Robert, Pulaski, PA 16143 (US); VARGO, Richard David, Cuyahoga Falls, OH 44223 (US)
(74) Representative: Kutsch, Bernd

(56) References cited:
- EP-A2- 1 344 635
- US-A1- 2015 059 984
- US-A1- 2015 114 571

## Description

### Field of the Invention

The invention relates to building tires, and more particularly to a tire building drum for shaping tires, and to an improved method of building and shaping tires.

### Background of the Invention

The manufacture of tires typically involves a tire building drum wherein, numerous tire components are applied to the drum in sequence, forming a cylindrical shaped tire carcass. The tire building drum may be a flat drum, unistage drum, a first stage drum or a high crown tire building drum. In either case, tire components are added onto the drum in succession in order to form a cylindrically shaped first stage green carcass. Next a shaping operation is performed to transform the cylindrical green carcass into a toroidally shaped green tire. Typically, high pressure, low volume shaping air is utilized when shaping the tire, wherein the beads are brought together rapidly. Inherent stresses are created in the green tire, particularly in the apex, bead area and sidewall due to the large compression forces and compound strain applied to the carcass in order to force the components into the desired toroidal shape. These inherent residual stresses can cause tire non-uniformity, poor handling and lower rolling resistance. Thus, an improved tire building process is thus desired that minimizes the residual tire building stresses resulting in an improved tire is desired.

US-A-2015/114571 describes a tire building drum in accordance with the preamble of claim 1.

EP-A-1 344 635 describes a radially expansible tire assembly drum and a method for forming tires. The tire building drum comprises a plurality of segments having an anchoring groove and a bead pocket forming an annular groove for receiving the beads.

### Summary of the Invention

The invention relates to a tire building drum in accordance with claim 1 and to a method in accordance with claim 9.

Dependent claims refer to preferred embodiments of the invention.

One or more embodiments of the present invention provide a second stage tire building drum comprising a first and second hub, wherein each hub is mounted on a central shaft of the second stage tire building drum, wherein each hub is mounted on an inner sleeve, wherein the inner sleeve has an inner surface that is threadedly engaged with an internal screw positioned within the inner sleeve for axial translation, and wherein each hub has a bead receiving mechanism, wherein said bead receiving mechanism includes one or more bead segments, wherein each bead segment has a pocket.

One or more embodiments of the present invention provide a second stage tire building drum comprising a first and second hub, wherein each hub is mounted on a central shaft of the second stage tire building drum, wherein each hub is mounted on an inner sleeve, wherein the inner sleeve is freely axially slidable on the central shaft, and wherein each hub has a bead receiving mechanism, wherein said bead receiving mechanism includes one or more bead segments, wherein each bead segment has a pocket.

In accordance with the invention, the pocket may have a planer inner receiving surface.

In a preferred aspect of the invention, the pocket has a pair of opposed angled retaining walls.

In yet another preferred aspect of the invention, the bead pocket has a seal member integrally formed with the bead pocket.

In yet another preferred aspect of the invention, the bead receiving mechanism uses a relatively low pressure clamping force.

In yet another preferred aspect of the invention, the bead pocket is formed of an elastomer.

In yet another preferred aspect of the invention, the bead pocket is formed of urethane.

In yet another preferred aspect of the invention, there are at least 24 bead segments.

In yet another preferred aspect of the invention, the bead pocket is joined to a seal member.

In yet another preferred aspect of the invention, the bead pocket has a seal having a free end which extends over the bead receiving surface.

One or more embodiments of the present invention provide a method of forming a tire having a first and second bead on a tire building drum comprising the steps of applying a green tire carcass onto the tire building drum, said tire building drum having a left and right hub, each hub having a bead pocket, placing the first and second bead onto a first and second respective bead pocket of the tire building drum, and inflating the carcass into engagement with a belt and tread package while moving at least one of the left and right hubs in the axial direction at a controlled velocity towards the other respective hub.

In a preferred aspect of the invention, both bead pockets are moved towards each other at a controlled velocity.

In a preferred aspect of the invention, the controlled velocity is less than 20 mm/s.

In a preferred aspect of the invention, the controlled velocity is less than 15 mm/s.

In a preferred aspect of the invention, the controlled velocity is less than 10 mm/s.

In a preferred aspect of the invention, the controlled velocity is less than 6 mm/s.

In a preferred aspect of the invention, no bead locking force is utilized.

One or more embodiments of the present invention provide a method of forming a tire having a first and second bead on a tire building drum comprising the steps of applying a green tire carcass onto the tire building drum, said tire building drum having a left and right hub, each hub having a bead pocket, placing the first and second bead onto a first and second respective bead pocket of the tire building drum, and inflating the carcass into engagement with a belt and tread package while moving at least one of the left and right hubs in the axial direction at a controlled velocity towards the other respective hub, further including the step of radially expanding the first and second bead receiving mechanisms into engagement with a respective first and second bead at a relatively low pressure.

One or more embodiments of the present invention provide a method of forming a tire having a first and second bead on a tire building drum comprising the steps of applying a green tire carcass onto the tire building drum, said tire building drum having a left and right hub, each hub having a bead pocket, placing the first and second bead onto a first and second respective bead pocket of the tire building drum, and inflating the carcass into engagement with a belt and tread package while moving at least one of the left and right hubs in the axial direction at a controlled velocity towards the other respective hub, wherein the carcass is inflated with airflow having a flow coefficient Cv greater than 2 of in a range of from 5 to 10.

In a preferred aspect of the invention, the carcass is inflated with air at a pressure of less than 0.69 bar.

In a preferred aspect of the invention, the carcass is inflated with air at a pressure of less than 0.345 bar.

In a preferred aspect of the invention, the carcass is inflated with air at a pressure of less than 0.207 bar.

One or more embodiments of the present invention provide a method of forming a tire having a first and second bead on a tire building drum comprising the steps of applying a green tire carcass onto the tire building drum, said tire building drum having a first and second hub, said first hub having a first bead pocket, and said second hub having a second bead pocket and placing the first and second bead onto the first and second respective bead pocket, inflating the carcass into engagement with a belt and tread package while allowing at least one of the first and second bead pockets to freely move in the axial direction. Preferably, both first and second bead pockets are allowed to freely move in the axial direction.

In a preferred aspect of the invention, the carcass is inflated with airflow having a flow coefficient Cv greater than 2 or in a range of from 5 to 10.

In a preferred aspect of the invention, the method comprises the step of inflating the carcass with low pressure, high volume air.

In a preferred aspect of the invention, no bead locking force is utilized.

One or more embodiments of the present invention provide a method of forming a tire having a first and second bead on a tire building drum comprising the steps of applying a green tire carcass onto the tire building drum, said tire building drum having a first and second hub, said first hub having a first bead pocket, and said second hub having a second bead pocket and placing the first and second bead onto the first and second respective bead pocket, inflating the carcass into engagement with a belt and tread package while allowing at least one of the first and second bead pockets to freely move in the axial direction, wherein the bead pockets are radially expanded with a relatively low bead locking force.

The invention provides in another aspect a method of forming a tire having a first and second bead on a tire building drum comprising the steps of: applying a green tire carcass onto the tire building drum, said tire building drum having a left and right hub, each hub having a bead pocket; placing the first and second bead onto a first and second respective bead pocket of the tire building drum; inflating the carcass into engagement with a belt and tread package while moving at least one of the left and right hubs in the axial direction at a controlled velocity towards the other respective hub.

### Definitions

For ease of understanding this disclosure, the following items are defined:
"Apex" means an elastomeric filler located radially above the bead and interposed between the plies and the ply turn-up.

"Axial" and "axially" means the lines or directions that are parallel or aligned with the longitudinal axis of rotation of the tire building drum.

"Bead" means that part of the tire comprising an annular tensile member commonly referred to as a "bead core" wrapped by ply cords and shaped, with or without other reinforcement elements such as flippers, chippers, apexes, toe guards and chafers, to fit the design rim.

"Belt Structure" or "Reinforcing Belts" means at least one annular layer or plies of parallel cords, woven or unwoven, underlying the tread and unanchored to the bead.

"Carcass" means an unvulcanized laminate of tire ply material and other tire components cut to length suitable for splicing, or already spliced, into a cylindrical or toroidal shape. Additional components may be added to the carcass prior to its being vulcanized to create the molded tire.

"Circumferential" means lines or directions extending along the perimeter of the surface of the annular tread perpendicular to the axial direction.

"Equatorial Plane (EP)" means the plane perpendicular to the tire's axis of rotation and passing through the center of its tread.

"Radial" and "radially" mean directions radially toward or away from the axis of rotation he tire building drum.

"Tread" means a rubber component which when bonded to a tire carcass includes that portion of the tire that come into contact with the road when the tire is normally inflated and under normal load.

### Brief Description of the Drawings

The invention will be described by way of example and with reference to the accompanying drawings in which:
Figure 1 is a perspective view of a second stage tire building drum.
Figure 2 is a side cross-sectional view of the tire building drum shown in Fig. 1.
Figure 3 is a cross-sectional view of the bead receiving mechanism of the tire building drum shown in Figure 2.
Figures 4 and 5 are alternate embodiments of the bead pockets.
Figure 6 is a cross-sectional view of the green tire carcass mounted in the bead pockets of the tire drum.
Figure 7 illustrates the carcass undergoing low pressure, high volume shaping before the tread and belt package is applied.
Figure 8 illustrates the green tire carcass inflating into the belt and tread package, with the green tire carcass shown in phantom.
Figure 9 illustrates the tire formed by shaping and inflation, with the green tire carcass shown in phantom.

### Detailed Description of Example Embodiment of the Invention

The invention provides a new and improved tire building drum and a new method that reduces the residual stresses in the green tire carcass, resulting in an improved tire. The process provides that the tire ply and components are shaped into a catenary structure. A catenary structure is a structure that has no tensile or compressive reactions at the base of the structure and has uniform strain along the length of the structure. In the case of a tire, the beads are the base of the structure and the length from the bead to the crown has uniform strain.

The tire building drum and method of the present invention allows the tire to be built into a catenary shape, producing a tire that has a bead area and sidewall made with minimal strain. The tire building drum allows the tire to be built so that the ply cords that have the shortest cord length which are maintained in tension, and not compression. The tire building drum also prevents ply cord trisomy, or the unravelling of the cords due to the cords being loaded in compression and not tension.

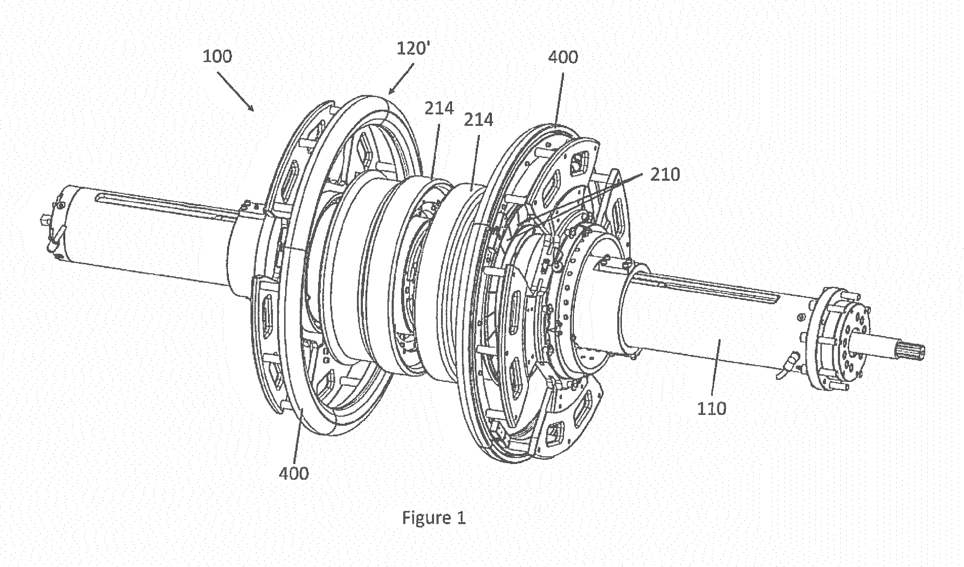

A first embodiment of a second stage tire building drum 100 of the present invention is shown in Figure 1. The tire building drum 100 has a central shaft 110 with a left (or first) hub 120' and a right (or second) hub 120 mounted on the central shaft 110. The left hub 120' is the mirror image of the right hub 120 and are otherwise mechanically identical except for the orientation. As shown in Figure 1 and Figures 2-4, each hub 120, 120' has an outer sleeve 130 that translates over a central shaft 110 of the tire building drum. The outer sleeve 130 is preferably connected to T bolts 133. The T bolts 133 have an inner end 137 that are affixed to inner sleeve 139. Each inner sleeve 139 has an internal portion 141 that is threadedly engaged with the internal screw 114 for axial movement. Thus, axial movement of each hub 120 is by a controlled axial translation from the inner screw. The controlled axial translation or controlled velocity is determined experimentally and is the rate of translation of each bead from the carcass tension during inflation under high inflation, low pressure air when the beads are freely slidable in the axial direction.

Each hub 120 further includes a bead lock mechanism 200 for receiving the bead area of the green carcass. Each bead lock mechanism 200 further includes a plurality of bead segments 210. Each bead segment 210 may expanded and contracted in a radial direction by bead actuating cylinders 220. Each bead locking mechanism 200 preferably utilizes zero or low pressure. Preferably the bead lock cylinder pressures range from zero to less than 5 bar, and more preferably from zero to 2 bar. The nonexistent or substantially reduced bead pressure is reduced to limit bead compression and prevent cold forging of the toe guard and chafer under the bead sole.

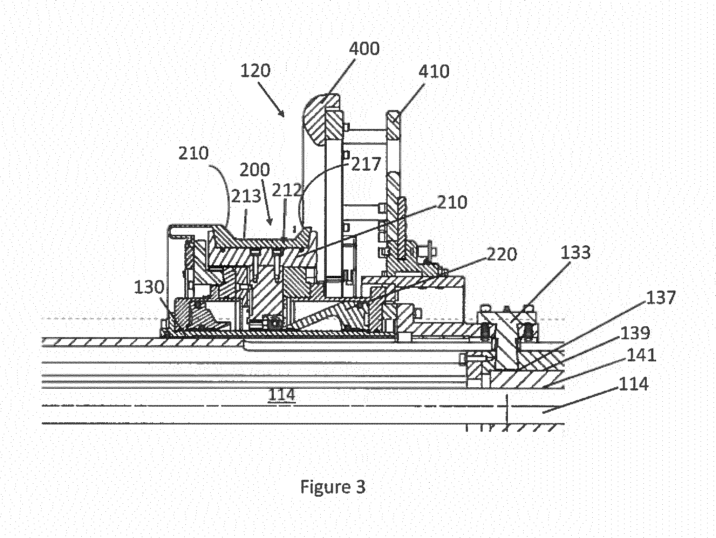

As shown in Figure 3, each bead segment 210 has a bead pocket 212 that facilitates rotation of the tire around the bead area during shaping. Each bead pocket 212 gently holds and supports the bead without the need of any bead lock force.

The bead pocket 212 as shown may have a flat bead receiving surface 213 with angled retaining sidewalls 215, 217. The flat bead receiving surface 213 are preferably angled in the range of 0 to 15 degrees from horizontal.

The bead pockets 212 are preferably formed of an elastomer, and more preferably formed of urethane.

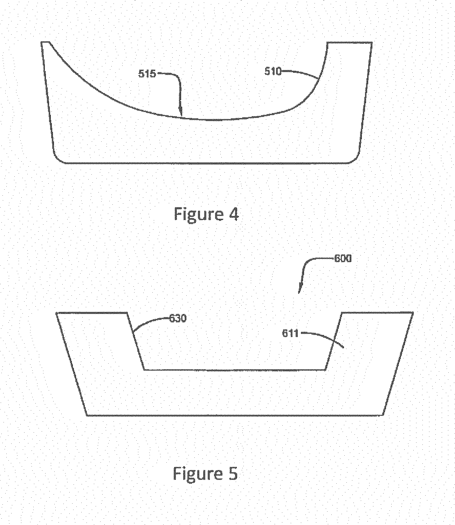

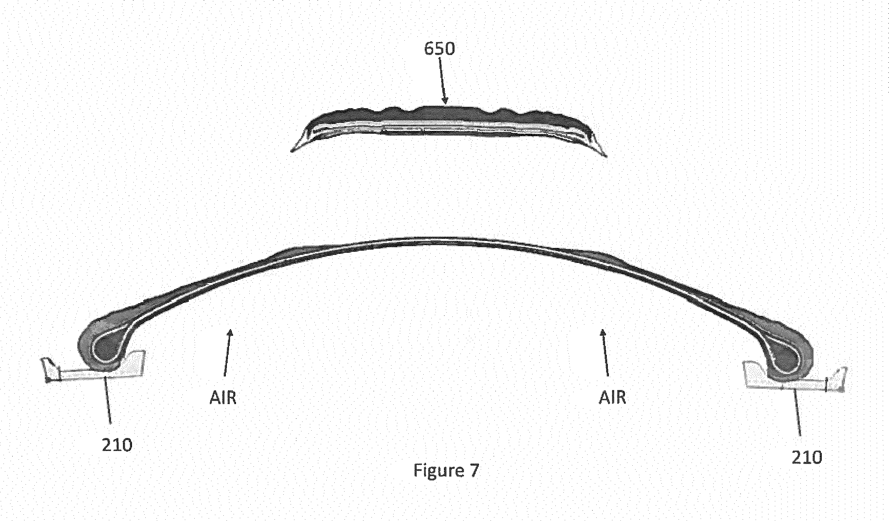

The bead pockets 212 allow the tire to rotate around the bead cable so that the tire down ply is pulled into tension and the apex is positioned at the cured ply line angle. The angled retaining sidewalls 215, 217 retain the bead in the bead pockets during tire shaping, as shown in Figures 7-9. The pocket 212 may have a curved receiving surface 515 with a retaining wall 510 as shown in Figure 4. The curve 515 may be symmetrical or asymmetrical in shape. Figure 5 illustrates that the pocket 212 may have angled retaining walls 611, 630. As shown in Figure 3, it is preferred that the pocket 212 has a flexible seal portion 214 that terminate in a distal end that is clamped in the housing 218 of the bead segment. A flexible seal 214 is preferably integrally formed with the pocket 212, as shown in Figure 1.

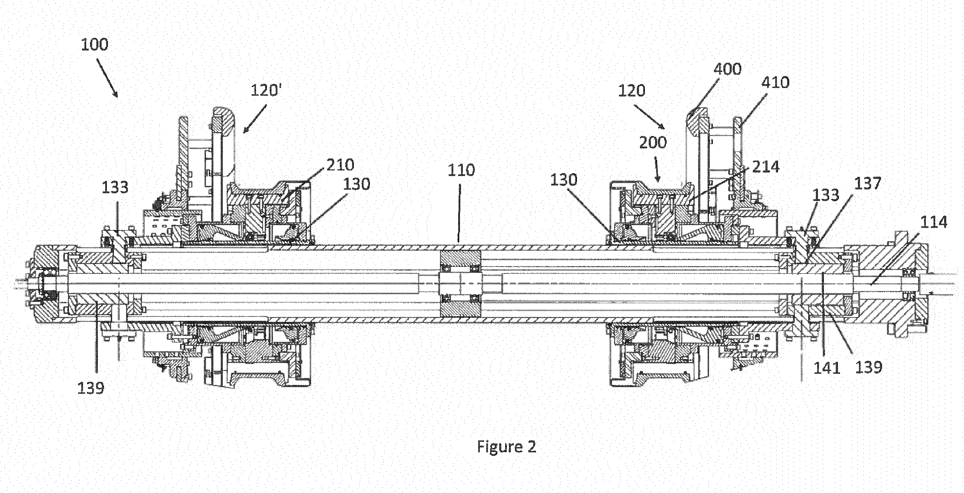

Figures 1-3 illustrate that the hubs 120 may further include an optional shaping plate 400. The optional shaping plate 400 is received in support brackets 410, as shown in Fig 2. The optional shaping plate 400 may assist the shaping process by engaging the mid sidewall of the tire during the shaping process.

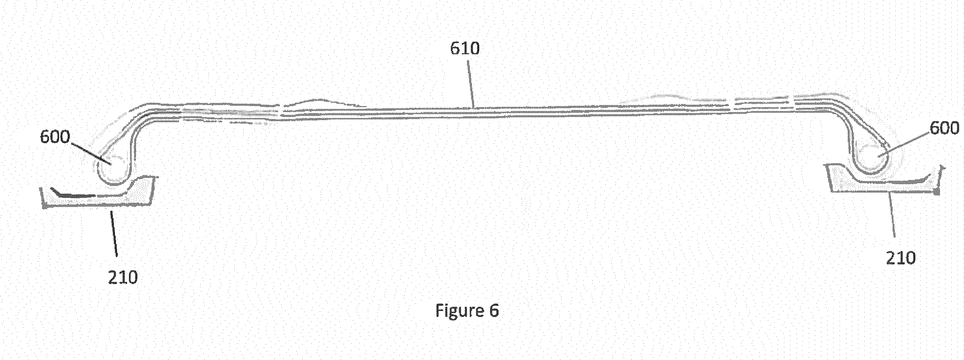

The first step of the catenary method of building tires begins with the tire building drum located in the start position as shown in Figure 1. A cylindrically shaped green tire carcass 610 is mounted on the bead mechanisms 200 on each hub 120, so that a respective bead area 600 is received in the bead pocket 212 of a respective hub, as shown in Figure 6.

The drum bead locking mechanisms 200 may optionally be radially expanded to exert a relatively low-pressure force on the beads sufficient to retain the bead in their axial position and allowing a tighter air seal of tire bead to the drum pocket seal and a more rapid carcass inflation while allowing rotation of the tire around the bead area 600.

After the green tire carcass is loaded, the next step is to shape the green carcass using the catenary shaping process of the invention. As the tire drum rotates, the green carcass 610 is quickly and properly inflated using low pressure, high volume shaping air as shown in Figure 7.

If the bead locking mechanisms 200 were positioned slightly inboard of the tire bead spacing, then the high volume low pressure air will inflate the carcass and draw the beads inward to the shoulder of the bead pocket.

Now, preferably utilizing high volume, low pressure air, the "b" distance (or radial distance between the carcass crown and the beads) is increased and carcass cord tension remains at a low and calculated value. The carcass tension is controlled during inflation, each hub is relocated at a controlled velocity that simulates the axial translation of the beads caused by the carcass tension if the hubs could freely slide axially inwards towards the opposite hub.

The controlled velocity is determined experimentally by measuring the rate of axial translation of the beads under carcass tension during inflation when the beads are free to axially move. For an aircraft tire, the controlled velocity is preferably in the range of from 7 to 12mm/s, and more preferably 8 to 10mm/s. For a passenger tire, the controlled velocity is preferably in the range of from 3 to 6 mm/s, and more preferably in the range of from 4 to 5 mm/s. In an alternate embodiment, the internal driving screw 114 is de-clutched from the motorization, allowing free axial movement of the hubs with the bead pulling in forces generated by the catenary shaping process.

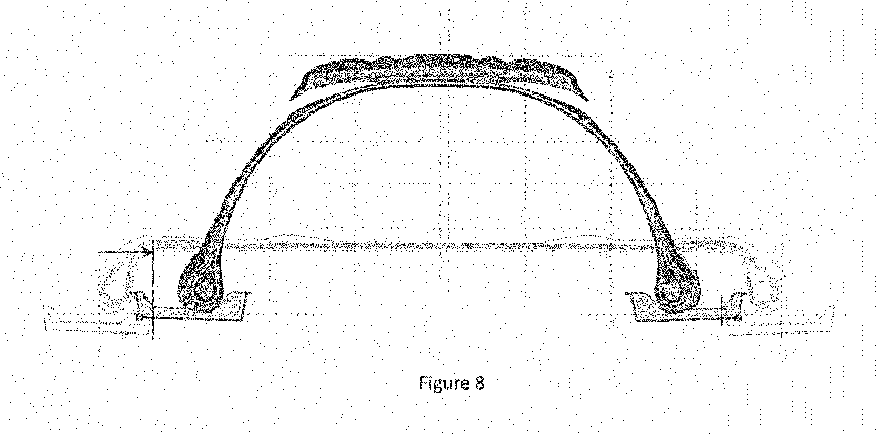

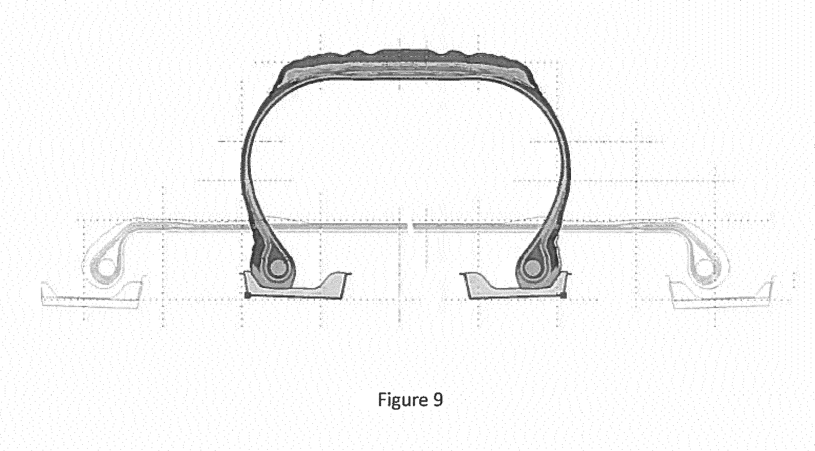

Figure 6 illustrates the position of the beads in the bead pockets 210 of the green tire carcass when loaded onto the tire building drum. The assembled belt and tread package 650 is positioned over the inflating carcass 600 as shown in Fig. 7, and the carcass is inflated using high volume, low pressure air. The shape of the bead pockets allows the tire to rotate around the bead area during inflation without the need for high bead clamping forces. The bead lock forces can be zero or be minimal. The carcass 600 expands into the assembled belt and tread package 650 as shown in Figure 8. When the sidewall angle is in the range of 55 degrees to 65 degrees, and the crown of the carcass has contacted the inside belt building diameter, the tire is at the neutral catenary shape where neither a tensile or compressive force is acting horizontally on the beads. Now both carcass and belt package share the same vertical centerline. As the beads are relocated closer and closer to the vertical centerline and the tire is shaped narrower than the catenary shape, the shaping air creates a force which slides the beads outward in the bead pocket, as shown in Figure 9.

The carcass is inflated using high volume, low pressure air. The pressure preferably does not exceed 0.69 bar, and is more preferably less than 0.344 bar, and most preferably less than 0.207 bar.

The flow rate is preferably increased from prior art process so that the flow coefficient Cv rate is greater than 2. Preferably, the flow coefficient of the shaping air is greater than 4, and most preferably greater than 9.

Next, the tread and shoulder area is stitched to the carcass preferably using a low stitching pressure (not shown). The stitching pressure is in the range of from 350 to 800 mbar, more preferably in the range of from 500-700mbar.

The stitcher, using low pressure, starts at the center of the tread and stitches the tread in a circumferential manner, shifting axially outward from the center of the tire. The stitcher also stitches the tread shoulder interface and shoulder area. The completed tire is shown in Figure 9, and the initial green tire carcass is shown in phantom. Then the tire is removed from the tire building drum completing the process. The green tire is then cured in a conventional mold.

The advantage of the catenary shaping process is that it does not produce any "ply pull through" which results in the distortion of the gauge of the inner liner and squeege. The catenary shaping process with low bead locking force allows the outer lang wire of the cable bead to rotate freely without any elastic energy around the inner wires of the cable bead. The catenary shaping process with the low bead locking force allows the up plies and down plies which are contacting and adhering to the outer lang wire of the cable bead to rotate freely without any elastic energy around the inner wires of the cable bead. The catenary shaping process with the low bead locking forces provide for tension in the carcass up plies and down plies. Further the tension between up and down plies is harmonized.

## Claims

1. A second stage tire building drum, the drum (100) comprising:
a first and second hub (120, 120'), wherein each hub is mounted on a central shaft (110) of the second stage tire building drum (100);
wherein each hub (120, 120') is mounted on an inner sleeve (139), wherein (i) the inner sleeve (139) has an inner surface that is threadedly engaged with an internal screw (114) positioned within the inner sleeve (139) for axial translation; or (ii) the inner sleeve (139) is freely axially slidable on the central shaft (110); **characterized in that** each hub (120, 120') has a bead receiving mechanism, wherein said bead receiving mechanism includes one or more bead segments (210), wherein each bead segment has a pocket (212), and wherein the pocket (212) has a planer inner receiving surface (515).

2. The second stage tire building drum of claim 1 wherein the pocket (212) has a pair of opposed angled retaining walls (510, 630, 611).

3. The second stage tire building drum of at least one of the previous claims wherein the bead pocket (212) has a seal member (214) integrally formed with the bead pocket (212).

4. The second stage tire building drum of at least one of the previous claims wherein the bead receiving mechanism is configured for using a relatively low pressure clamping force.

5. The second stage tire building drum of at least one of the previous claims wherein the bead pocket (212) is formed of an elastomer or is formed of urethane.

6. The second stage tire building drum of at least one of the previous claims wherein there are at least 24 bead segments (210).

7. The second stage tire building drum of at least one of the previous claims wherein the bead pocket (212) is joined to a seal member (214).

8. The second stage tire building drum of claim 1 wherein the bead pocket (212) has a seal having a free end which extends over the bead receiving surface.

9. A method of forming a tire having a first and second bead on a tire building drum (100) according to any of the previous claims, the method comprising the steps of:
applying a green tire carcass (610) onto the tire building drum (100), said tire building drum (100) having a left and right hub (120, 120'), said first or left hub (120) having a first bead pocket (212), and said second or right hub (120') having a second bead pocket (212), each of the first and second bead pocket (212) having a planar inner receiving surface (515);
placing the first and second bead onto a first and second respective bead pocket (212) of the tire building drum (100);
inflating the carcass (610) into engagement with a belt and tread package (650) while:
(i) moving at least one of the left and right hubs (120, 120') in the axial direction at a controlled velocity towards the other respective hub; or
(ii) allowing at least one of the first and second bead pockets (212) to freely move in the axial direction.

10. The method of claim 9 wherein both bead pockets (212) are moved towards each other at a controlled velocity, preferably at a controlled velocity of less than 20 mm/s, less than 15 mm/s, less than 10 mm/s or less than 6 mm/s.

11. The method of claim 9 or 10 wherein no bead locking force is utilized.

12. The method of 9, 10 or 11 further including the step of radially expanding the first and second bead receiving mechanisms into engagement with a respective first and second bead at a relatively low pressure.

13. The method of at least one of the claims 9 to 12 wherein the carcass is inflated with an airflow having a flow coefficient Cv greater than 2 or in a range of from 5 to 10.

14. The method of at least one of the claims 9 to 13 wherein the carcass is inflated with air at a pressure of less than 0.69 bar, preferably less than 0.345 bar or less than 0.207 bar.

15. The method of at least one of the claims 9 to 13 wherein both first and second bead pockets (212) are allowed to freely move in the axial direction; and/or wherein the bead pockets (212) are radially expanded with a relatively low bead locking force.

## Patentansprüche

1. Reifenaufbautrommel der zweiten Stufe, wobei die Trommel (100) Folgendes umfasst:
eine erste und eine zweite Nabe (120, 120'), wobei jede Nabe auf einer zentralen Welle (110) der Reifenaufbautrommel (100) der zweiten Stufe montiert ist;
wobei jede Nabe (120, 120') an einer Innenhülse (139) montiert ist, wobei
(i) die Innenhülse (139) eine Innenoberfläche aufweist, die mit einer in der Innenhülse (139) positionierten inneren Schraube (114) für axiale Verschiebung mit Gewinde in Eingriff steht; oder
(ii) die Innenhülse (139) auf der zentralen Welle (110) frei axial gleitbar ist;
**dadurch gekennzeichnet, dass** jede Nabe (120, 120') einen Wulstaufnahmemechanismus aufweist, wobei der Wulstaufnahmemechanismus ein oder mehrere Wulstsegmente (210) einschließt, wobei jedes Wulstsegment eine Aussparung (212) aufweist und wobei die Aussparung (212) eine ebene Innenaufnahmeoberfläche (515) aufweist.

2. Reifenaufbautrommel der zweiten Stufe nach Anspruch 1, wobei die Aussparung (212) ein Paar gegenüberliegender abgewinkelter Sicherungswände (510, 630, 611) aufweist.

3. Reifenaufbautrommel der zweiten Stufe nach wenigstens einem der vorhergehenden Ansprüche, wobei die Wulstaussparung (212) ein Dichtungselement (214) aufweist, das mit der Wulstaussparung (212) einstückig ausgebildet ist.

4. Reifenaufbautrommel der zweiten Stufe nach wenigstens einem der vorhergehenden Ansprüche, wobei der Wulstaufnahmemechanismus zum Verwenden einer Klemmkraft mit relativ geringem Druck konfiguriert ist.

5. Reifenaufbautrommel der zweiten Stufe nach wenigstens einem der vorhergehenden Ansprüche, wobei die Wulstaussparung (212) aus einem Elastomer ausgebildet ist oder aus Urethan ausgebildet ist.

6. Reifenaufbautrommel der zweiten Stufe nach wenigstens einem der vorhergehenden Ansprüche, wobei wenigstens 24 Wulstsegmente (210) vorhanden sind.

7. Reifenaufbautrommel der zweiten Stufe nach wenigstens einem der vorhergehenden Ansprüche, wobei die Wulstaussparung (212) an ein Dichtungselement (214) gefügt ist.

8. Reifenaufbautrommel der zweiten Stufe nach Anspruch 1, wobei die Wulstaussparung (212) eine Dichtung mit einem freien Ende aufweist, das sich über die Wulstaufnahmeoberfläche erstreckt.

9. Verfahren zum Ausbilden eines Reifens, der einen ersten und einen zweiten Wulst auf einer Reifenaufbautrommel (100) nach einem der vorhergehenden Ansprüche aufweist, wobei das Verfahren die folgenden Schritte umfasst:
Aufbringen einer Reifenrohlingskarkasse (610) auf die Reifenaufbautrommel (100), wobei die Reifenaufbautrommel (100) eine linke und eine rechte Nabe (120, 120') aufweist, wobei die erste oder die linke Nabe (120) eine erste Wulstaussparung (212) aufweist und wobei die zweite oder die rechte Nabe (120') eine zweite Wulstaussparung (212) aufweist, wobei jede der ersten und der zweiten Wulstaussparung (212) eine ebene Innenaufnahmeoberfläche (515) aufweist;
Platzieren des ersten und des zweiten Wulstes auf einer ersten und einer zweiten jeweiligen Wulstaussparung (212) der Reifenaufbautrommel (100);
Füllen der Karkasse (610) in Eingriff mit einem Gürtel- und Laufflächenpaket (650), während Folgendem:
(i) Bewegen der linken und/oder der rechten Nabe (120, 120') in axialer Richtung mit einer gesteuerten Geschwindigkeit in Richtung der jeweiligen anderen Nabe; oder
(ii) Ermöglichen, dass sich die erste und/oder die zweite Wulstaussparung (212) frei in axialer Richtung bewegen kann.

10. Verfahren nach Anspruch 9, wobei beide Wulstaussparungen (212) in Richtung zueinander mit einer gesteuerten Geschwindigkeit, vorzugsweise mit einer gesteuerten Geschwindigkeit von weniger als 20 mm/s, weniger als 15 mm/s, weniger als 10 mm/s oder weniger als 6 mm/s, bewegt werden.

11. Verfahren nach Anspruch 9 oder 10, wobei keine Wulstverriegelungskraft genutzt wird.

12. Verfahren von 9, 10 oder 11, das ferner den Schritt eines radialen Ausdehnens des ersten und des zweiten Wulstaufnahmemechanismus in Eingriff mit einem jeweiligen ersten und zweiten Wulst bei einem relativ niedrigen Druck einschließt.

13. Verfahren nach wenigstens einem der Ansprüche 9 bis 12, wobei die Karkasse mit einem Luftstrom gefüllt wird, der einen Durchflusskoeffizienten Cv von über 2 oder in einem Bereich von 5 und 10 aufweist.

14. Verfahren nach wenigstens einem der Ansprüche 9 bis 13, wobei die Karkasse mit Luft bei einem Druck von weniger als 0,69 bar, vorzugsweise weniger als 0,345 bar oder weniger als 0,207 bar, gefüllt wird.

15. Verfahren nach wenigstens einem der Ansprüche 9 bis 13, wobei es sowohl der ersten als auch der zweiten Wulstaussparung (212) ermöglicht wird, sich in der axialen Richtung frei zu bewegen; und/oder
wobei die Wulstaussparungen (212) mit einer relativ geringen Wulstverriegelungskraft radial ausgedehnt werden.

## Revendications

1. Tambour de confection de bandage pneumatique de deuxième stade, le tambour (100) comprenant :
un premier et un deuxième moyeu (120, 120') ; dans lequel chaque moyeu est monté sur un arbre central (110) du tambour de confection de bandage pneumatique de deuxième stade (100) ;
dans lequel chaque moyeu (120, 120') est monté sur un manchon interne (139) ; dans lequel (i) le manchon interne (139) possède une surface interne qui vient s'engrener par filet de vis avec une vis interne (114) disposée au sein du manchon interne (139), destinée à un mouvement de translation dans la direction axiale ; ou bien (ii) le manchon interne (139) a la possibilité de coulisser librement dans la direction axiale sur l'arbre central (110) ; **caractérisé en ce que** chaque moyeu (120, 120') possède un mécanisme de réception de talon ; dans lequel ledit mécanisme de réception de talon englobe un ou plusieurs segments de talons (210) ; dans lequel chaque segment de talon possède une poche (212) ; et dans lequel la poche 212) possède une surface de réception interne (515) de forme plane.

2. Tambour de confection de bandage pneumatique de deuxième stade selon la revendication 1, dans lequel la poche (212) possède une paire de parois de retenue (510, 630, 611) qui forment des angles opposés.

3. Tambour de confection de bandage pneumatique de deuxième stade selon au moins une des revendications précédentes, dans lequel la poche de talon (212) possède un élément faisant office de joint d'étanchéité (214) réalisé en une seule pièce avec la poche de talon (212).

4. Tambour de confection de bandage pneumatique de deuxième stade selon au moins une des revendications précédentes, dans lequel le mécanisme de réception de talon est configuré pour utiliser une force de serrage dans des conditions de pression relativement faible.

5. Tambour de confection de bandage pneumatique de deuxième stade selon au moins une des revendications précédentes, dans lequel la poche de talon (212) est réalisée à partir d'un élastomère ou est réalisée à partir d'uréthane.

6. Tambour de confection de bandage pneumatique de deuxième stade selon au moins une des revendications précédentes, dans lequel on prévoit au moins 24 segments de talons (210).

7. Tambour de confection de bandage pneumatique de deuxième stade selon au moins une des revendications précédentes, dans lequel la poche de talon (212) est jointe à un élément (214) faisant office de joint d'étanchéité.

8. Tambour de confection de bandage pneumatique de deuxième stade selon la revendication 1, dans lequel la poche de talon (212) dispose d'un joint d'étanchéité qui possède une extrémité libre qui s'étend par-dessus la surface de réception de talon.

9. Procédé de confection d'un bandage pneumatique qui possède un premier et un deuxième talon sur un tambour de confection de bandage pneumatique (100) selon l'une quelconque des revendications précédentes, le procédé comprenant les étapes dans lesquelles :
on applique une carcasse de bandage pneumatique non vulcanisée (610) sur le tambour de confection de bandage pneumatique (100), ledit tambour de confection de bandage pneumatique (100) possédant un moyeu gauche et un moyeu droit (120, 120'), ledit premier moyeu ou moyeu gauche (120) possédant une première poche de talon (212) et ledit deuxième moyeu ou moyeu droit (120') possédant une deuxième poche de talon (212), chaque poche de talon parmi lesdites première et deuxième poche de talon (212) possédant une surface de réception interne (515) de forme plane ;
on place le premier et le deuxième talon sur une première et sur une deuxième poche de talon respective (212) du tambour de confection de bandage pneumatique (100) ;
on gonfle la carcasse (610) dans le but de l'amener en contact avec un ensemble de ceinture et de bande de roulement (650), tandis que :
(i) l'on déplace au moins un moyeu parmi lesdits moyeux gauche et droit (120, 120') dans la direction axiale à une vitesse contrôlée dans la direction de l'autre moyeu respectif ; ou
(ii) on permet à au moins une poche parmi la première et la deuxième poche de talon (212) de se déplacer librement dans la direction axiale.

10. Procédé selon la revendication 9, dans lequel on déplace les deux poches de talons (212) à la fois dans la direction l'une de l'autre à une vitesse contrôlée, de préférence à une vitesse contrôlée qui est inférieure à 20 mm/s, inférieure à 15 mm/s, inférieure à 10 mm/s, ou inférieure à 6 mm/s.

11. Procédé selon la revendication 9 ou 10, dans lequel on n'utilise aucune force de verrouillage de talon.

12. Procédé selon la revendication 9, 10 ou 11, englobant en outre l'étape dans laquelle on élargit dans la direction radiale le premier et le deuxième mécanisme de réception de talon afin de les amener en contact avec un premier et un deuxième talon respectif dans des conditions de pression relativement peu élevée.

13. Procédé selon au moins une des revendications 9 à 12, dans lequel la carcasse est gonflée avec un flux d'air qui possède un coefficient d'écoulement Cv qui est supérieur à 2 ou qui se situe dans une plage de 5 à 10.

14. Procédé selon au moins une des revendications 9 à 13, dans lequel la carcasse est gonflée avec de l'air qui est soumis à une pression qui est inférieure à 0,69 bar, de préférence qui est inférieure à 0,345 bar ou qui est inférieure à 0,207 bar.

15. Procédé selon au moins une des revendications 9 à 12, dans lequel on laisse à la fois la première et la deuxième poche de talon (212) se déplacer librement dans la direction axiale ; et/ou dans lequel on soumet les poches de talons (212) à un élargissement dans la direction radiale en utilisant une force de verrouillage de talon relativement peu élevée.
